**Europäisches Patentamt**

**European Patent Office**

**Office européen des brevets**

(19)

(11)  **EP 0 721 264 B1**

(12)  **EUROPEAN PATENT SPECIFICATION**

(45) Date of publication and mention
of the grant of the patent:
**26.11.2003   Bulletin 2003/48**

(21) Application number: **95921994.0**

(22) Date of filing: **20.06.1995**

(51) Int Cl.$^7$: **H04J 13/02**, H04B 7/26

(86) International application number:
**PCT/JP95/01222**

(87) International publication number:
**WO 96/000470 (04.01.1996 Gazette 1996/02)**

(54) **METHOD AND DEVICE FOR RECEIVING CODE-DIVISION MULTIPLEX SIGNAL**

VERFAHREN UND ANORDNUNG ZUM EMPFANGEN EINES
CODE-DIVISION-MULTIPLEXSIGNALS

PROCEDE ET DISPOSITIF DE RECEPTION DE SIGNAUX MULTIPLEXES A DIVISION DE CODE

(84) Designated Contracting States:
**DE FR GB IT SE**

(30) Priority: **23.06.1994   JP 14183394**

(43) Date of publication of application:
**10.07.1996   Bulletin 1996/28**

(73) Proprietor: **NTT MOBILE COMMUNICATIONS
NETWORK INC.
Minato-ku, Tokyo 105-8436 (JP)**

(72) Inventors:
• **MIKI, Yoshinori
Yokohama-shi Kanagawa 235 (JP)**
• **SAWAHASHI, Mamoru
Kanagawa 239 (JP)**

(74) Representative: **Hoffmann, Eckart, Dipl.-Ing.
Patentanwalt,
Bahnhofstrasse 103
82166 Gräfelfing (DE)**

(56) References cited:
**EP-A- 0 599 553                    EP-A- 0 602 843
JP-A- 5 227 124**

• **LUPAS R ET AL: "Near-far resistance of
multiuser detectors in asynchronous channels"
IEEE TRANSACTIONS ON COMMUNICATIONS,
APRIL 1990, USA, vol. 38, no. 4, ISSN 0090-6778,
pages 496-508, XP002019257**
• **IEICE TRANSACTION OF SPRING CONVENTION
LECTURE, 1994, (Vol. 2), (Lecture Nos. B-419,
B-426), (1994), pages 419, 426.**

## Description

FIELD OF THE TECHNOLOGY

The present invention relates to a method for receiving a code division multiple access signal which is applied to mobile communications and utilizes spectrum spreading, and more particularly, to a method and an apparatus for receiving M signals (M is an integer number greater than 1) from a single or a plurality of communicators (users) via a single or a plurality of channels (paths) and for obtaining a de-spread output which is the result of the de-correlation process of the received signal using de-spreading codes to eliminate interferences.

PRIOR ART

In various communication systems, studies for practical use of a Code Division Multiple Access System (CDMA) which utilizes the spectrum spread communication have been getting active because of the superior anti-interference and confidentiality of the spectrum spread communications.

One of the problems of CDMA system is so called near-far problem wherein the signal power received at a central station significantly varies dependent on the location of the user. In a CDMA system, since the same frequency band is shared by a plurality of users, the communication quality is deteriorated by interferences from the other users. For example, when a user located near to the central station and a user located far from the central station communicate at the same time, the signal power from the near user received at the central station is large while the signal power from the far user received at the base station is small. This means that the communication between the far user and the central station is significantly deteriorated by the interference of the near user.

Recently, Ruxandra Lupas and Sergio Verdu of Princeton University announced a class of linear filter which can estimate a sending signal based on a received signal from each of the users in a binary asynchronous COMA system which receives additive Gaussian white noise. The filter of this class is referred to as a de-correlation filter. This de-correlation filter is configured using spreading codes of each user and receiving time difference information of each receiving signal symbol and allows to estimate a sending symbol which is not dependent on each receiving signal power by eliminating the correlating components among the receiving signals to make an orthogonalization process. In addition, the processing volume of the de-correlation filter increases within the range proportional to the number of users who are communicating at the same time and may not significantly increase (R.Lupas and S. Verdu, "Near-Far Resistance of Multi-user Detectors in Asynchronous Channels", IEEE Trans. COM. Vol. COM-38, pp. 496-508, 1990).

One of the characteristics of applying a CDMA system to mobile communications is that a signal corresponding to the respective channel can be separated from the receiving signal which is a composite signal of the signals passed through multiple channels in the de-spreading process. Namely, in a mobile communication environment, a signal transmitted from a sending station generally passes through multiple radio wave channels and receives respective delay and fading to reach a receiving station. If a reciprocal of band width (= chip rate) after spectrum spreading is less than the delay time difference in those channels, a correlation peak appears at the timing corresponding to the delay time of each signal received via each channel after de-spreading (this is referred to as a path separation). Since each signal receives an independent fading (phase rotation and amplitude variation), an improvement effect by diversity can be obtained by compositing the signals after compensating each phase rotation. The receiving method utilizing this is known as RAKE receiving system. In general, the more paths, the more diversity gain can be obtained.

However, the path separation function by such a de-spreading has a shortcoming as described below. What is controllable in the aforementioned transmission power control is the power of the composite receiving wave and not the transmission power of each channel. This means that the variation caused by fading still remains in the signal after the path separation. Although every signal after the path separation is a desired signal component, each receiving signal power is not controlled to be constant. Thus, the diversity effect by RAKE receiving is decreased because of the mutual interference (dependent on self-correlation characteristics of spreading codes of desired signal) among those signals.

Further, since signals from other users are also received via multiple channels, the desired signal independently receives an interference from each of the receiving signals passed through the multiple channels of other users. As mentioned above, even if the power of the composite receiving signal wave is controlled to be constant, the variation by fading remains in the signal after the path separation. Thus, the influence of the interference to the desired signal changes in the same speed as the variation of the signal after the path separation.

A method to prevent this shortcoming is to apply aforementioned de-correlation filter deeming each signal component of each user to be an independent interference wave. That is, for example, if K users communicate over L channels, a de-correlation filter is formed deeming LK signals obtained after the path separation by de-spreading to be the signals from independent users (at this time, the transfer function of the de-correlation filter is a rational function matrix of LKxLK). As mentioned above, since a de-correlation filter is not influenced by the differences among receiving signal powers, the influence of interference waves can be eliminated even if the signal variation remains in a signal after the path separation.

However, in this method, since a de-correlation filter is used, there is a shortcoming that Noise Enhancement associated with the de-correlation process of the receiving signal cannot be avoided. That is, the more the number of receiving signals (number of users K x number of channels L) is increased, the more Gaussian noise is enhanced at the output of the de-correlation filter. This means that when a de-correlation filter is applied to CDMA communications under multi-channel environment such as mobile communications, Noise Enhancement is increased corresponding to the number of all receiving signals rather than the number of users. This also means that the more the number of channels for the same number of users is increased, the more Noise Enhancement is increased. The CDMA system has the advantage that the more the number of channels is, the more diversity gain is obtained. However, the advantage is offset by the aforementioned Noise Enhancement.

In order to cope with this shortcoming, a method for inputting a composite signal weighted by an estimated value of channel transfer function to a de-correlation filter rather than inputting each receiving signal itself is described in the literature, S. Haykin, 2nd Edition of "Adaptive Filter Theory", Prentice Hall, pp. 477-407, 1991. In this patent application, it is described that Noise Enhancement can be avoided under an assumption that a transfer function of each channel is sufficiently estimated. When the CDMA system is applied to mobile communications, an adaptability to high speed fading is essential. For example, if the frequency used is in the 2 GHz band and the user's moving speed is 120 km/h, the maximum Doppler frequency is 240 Hz. When the channel transfer function is estimated, if a sufficient estimation for such high speed fading is not obtained, the characteristics would significantly be deteriorated.

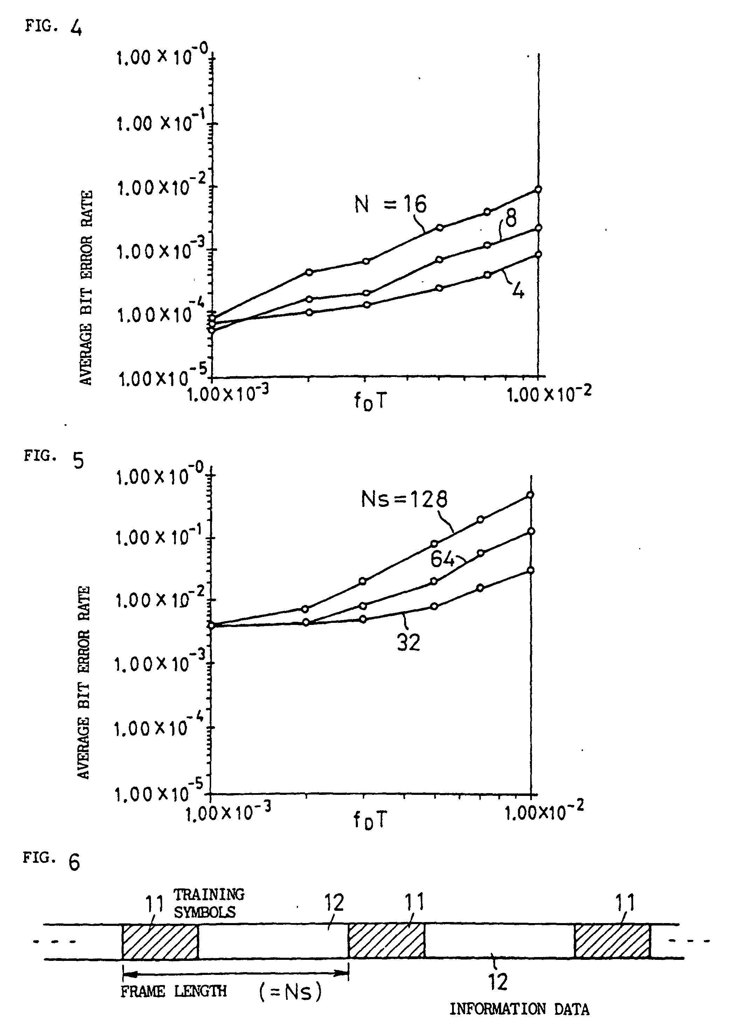

In the method described in the above literature, each channel transfer function is estimated by a recursive estimation process such as an RLS algorithm by providing a training segment in a sending signal. Fig. 5 shows an effect of the method of the above literature obtained by a computer simulation. The following simulation conditions are used; the number of simultaneous communicators is 5, SN ratio after de-spreading is 10 dB, modulation is BPSK, and an asynchronous communication environment is employed. The horizontal axis represents $f_D T$ which is a normalized value of the maximum Doppler frequency $f_D$ (Hz) normalized by a reciprocal T of symbol transmission speed (bits/sec) and the vertical axis represents an average bit error rate for all the communicators. Fig. 6 shows a transmission signal format. A training signal 11 consisting of a plurality of symbols is located at the begin of each frame and information data is located between two training signals. A frame comprises a training signal and information data and the total length is Ns symbols. For the information data symbols, the channel transfer function is recursively estimated by feeding back the result of the symbol decision and using RLS algorithm.

In Fig. 5, regarding $f_D T$ of horizontal axis, the larger value means higher speed variation of the channel characteristics i.e., higher speed fading. The length of each training segment is 8 symbols and the frame length Ns is Ns=32, 64 and 128 (3 cases). The larger value of Ns means that the ratio of the information symbols to all the transmission symbols is higher, i.e., higher information transfer efficiency. The larger $f_D T$ is, the worse the error rate is. If the ratio of the information data length to the training signal length is larger, the error rate gets worse and the deterioration rate increases as the fading speed increases. In an example of an actual communication environment of $f_D$=240 Hz and 1/T=128 K bits /sec, $f_D T$ is in the range of $f_D T$=7.5×10. As seen from the Figure, the average bit error rate is significantly deteriorated even if $f_D T$ is in the range of $f_D T$=7.5×10. Such a deterioration of the characteristics is a substantial shortcoming. As mentioned above, in the conventional method wherein a channel transfer function is estimated using a recursive estimation process such as an RLS algorithm, the estimation cannot follow the channel characteristics changes in response to the high speed fading which possibly occurs in the actual mobile communications, and thus, there is a shortcoming that the characteristics are significantly deteriorated.

The EP-A-0 599 553 and EP-A-0 602 843 relate to receiving data in a CDMA system and disclose elimination of correlation among de-spread signals but do not teach anything about elimination of channel distortion. The document JP-A-5227124 relates to a CDMA communication scheme using a short code and a long code, but does not teach anything about elimination of correlation or elimination of channel distortion.

Of the document IEICE TRANSACTION OF SPRING CONVENTION LECTURE, 1994 (Vol. 2), pp. 419, 426, Lecture No. B-419 relates to CDMA, wherein a data channel and a pilot channel are orthogonalized and combined and the combined signal is subjected to DPSK modulation. At receiving side, the pilot channel is subjected to RAKE reception. This document does not teach anything about elimination of correlation. Lecture No. B-426 relates to DS/CDMA, wherein correlation interferences caused by multi-path reception are eliminated by de-correlation; however, the document does not teach anything about elimination of channel distortion

It is a first object of the present invention to provide a method and an apparatus for receiving code division multiple access signals wherein the deterioration of receiving characteristics is small under the high speed fading environment where the channel propagation characteristics change very rapidly.

It is a second object of the present invention to provide a method and an apparatus for achieving the above first object and for receiving code division multiple access signals wherein Noise Enhancement is less effective under the multiple channel environment.

## DISCLOSURE OF THE INVENTION

These objects are achieved by a two alternative methods as claimed in claims 1 and 2, respectively, and corresponding apparatus as claimed in claims 6 and 7, respectively.

As described above, the method and apparatus of the present invention are characterized in that a transfer function is estimated by means of interpolation using pilot signals in a code division multiple access method/apparatus where a phase compensation and a weighted composition using estimated channel transfer functions are performed and an orthogonalization of each signal is performed using a de-correlation filter.

## BRIEF DESCRIPTION OF THE DRAWINGS

Fig. 1    shows an example of the code format created at the sender's side in the present Invention.

Fig. 2    is a block diagram showing an embodiment of a receiving apparatus of the present Invention.

Fig. 3    is a block diagram showing another embodiment of a receiving apparatus of the present invention.

Fig. 4    shows an example of relationship between average bit error rate and normalized fading speed in the present invention.

Fig. 5    shows error rate characteristics in the conventional channel recursive estimation process.

Fig. 6    shows a sender's side signal format used in Fig. 5.

## BEST FORM FOR IMPLEMENTING THE INVENTION

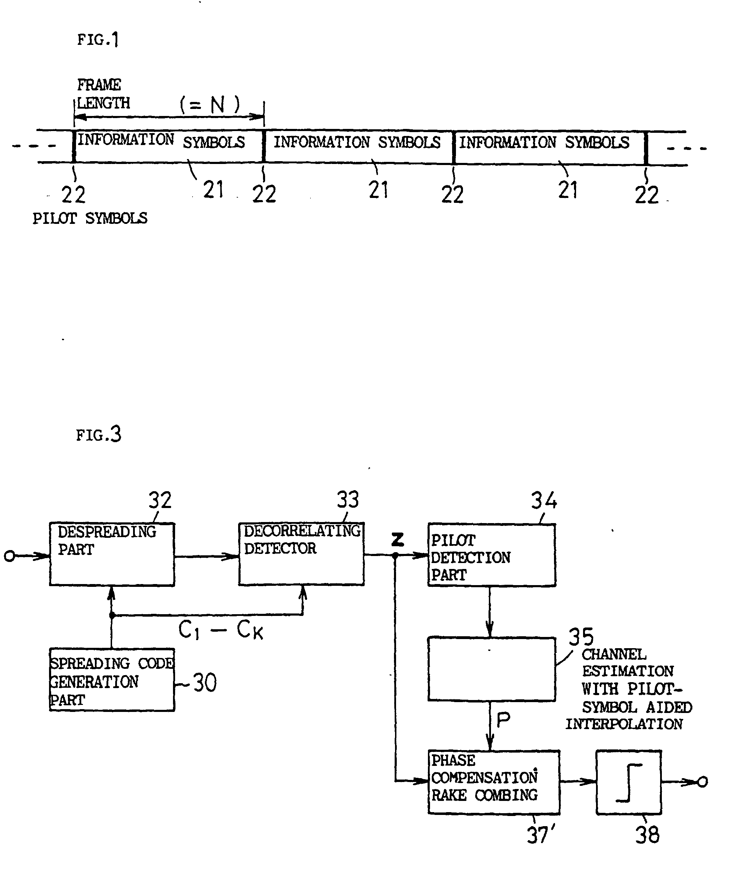

Fig. 1 shows a signal format created at sender's side for implementing the receiving method of code division multiple access signals according to the present invention. An information data 21 to be sent is allocated to each frame and a pilot signal 22 consisting of one or several symbols is inserted at the begin of each frame. A segment of the pilot signal is referred to as a training segment. Each pilot signal 22 has a known symbol value. Each frame consists of N symbols including the pilot signal.

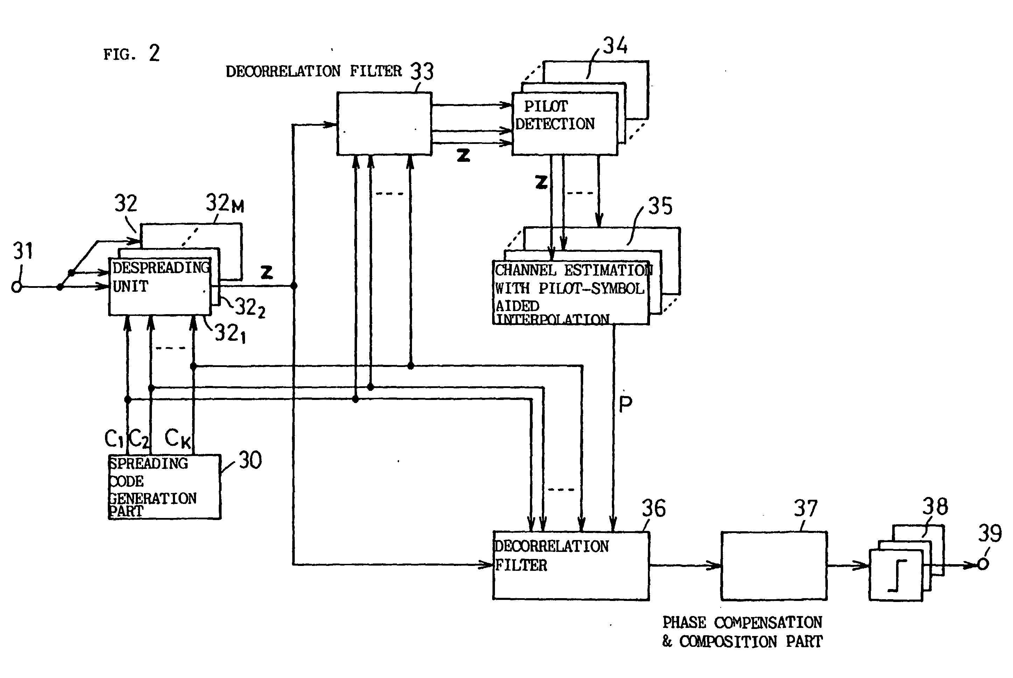

Fig. 2 shows, for example, a receiver's side configuration of a base station. A receiving signal from an input terminal 31 is de-spread with spreading codes $C_1$-$C_K$ corresponding to respective users at a de-spreading part 32 and is separated to a signal corresponding to each channel of each user and then outputted as a vector Z in which those signal components are arranged. For example, assuming that the number of maximum simultaneous users is K and the number of channels to be considered for the signal from each user is L, the de-spreading part 32 comprises M=KL de-spreading units $32_1$-$32_M$, and each of the K spreading codes $C_1$-$C_K$ corresponding to the respective users is provided from a de-spreading code generation part 30 at the timing corresponding to the respective delay time of each of the L channels. Each de-spreading unit can be configured as a matched filter or a sliding correlation unit and M=KL received signal components $Z_1$-$Z_M$ can separately be obtained. This is identical with the path separation in conventional RAKE receiving. A KL dimension signal vector Z in which each of the path separated signal components is arranged is obtained every symbol cycle and is supplied to a de-correlation filter 33 and a de-correlation filter 36.

KL components of each signal vector Z supplied from the de-spreading unit 32 are inputted to the de-correlation filter 33. The de-correlation filter 33 eliminates mutual correlation components (interference components) among the separated signal components of L users caused by mutual correlation among K spreading codes in use to output a KL dimension signal vector $Z=(Z_1, Z_2,....Z_M)$. Regarding the series of signal components after the elimination of the correlation for each channel of each user, a pilot detection part 34 comprising M=KL pilot detection units $34_1$-$34_M$ detects the respective pilot signal location. A transfer function interpolation part 35 estimates the channel transfer function in the following procedure for the series of signal components of each channel of each user using the detected pilot signal.

Since the symbol value of the pilot signal is known, the transfer function of the channel through which the signal component passed can be obtained by dividing the pilot signal part 22 (refer to Fig. 1) in the series of received signal components in each channel of each user detected by the pilot detection part 34 by its symbol value. In the present invention, the transfer function in the information data segment 21 between the adjacent pilot signals 22 is estimated using transfer function values of the timings of the pilot signals 22 of one or several frames located before and after that segment, for example, using a first degree (linear) interpolation or a second degree interpolation. (For example, refer to a paper by Sampei "A Fading Distortion Compensation System for 16 QAM for Land Mobile Communications", Journal of Institute of Electronics, Information and Communications of Japan B-II Vol. J72-B-II, No.1, pp.7-15).

For example, in the case of first degree Interpolation, if a known pilot symbol value is d, an estimated fading value is $\xi$, a frame number is k and Nk is a pilot signal timing, fading at the pilot signal timing is obtained by the following formulas.

$$\xi(Nk)=Z(Nk)/d$$

$$\zeta(N[k+1])=Z(N[k+1])/d$$

Thus, an estimated fading value at an arbitrary symbol timing (kN+m) in an information data segment 21 is represented by the following formula,

$$\xi(Nk+m)=nx\xi(Nk)/N+(N-m)\times\xi(N[k+1])/N \qquad (1)$$

where m=1, 2,....N-$N_P$, $N_P$ is the number of symbols in a pilot signal segment (training segment) 22. Such a fading value obtained by an interpolation represents a transfer function of a channel through which the receiving signal passed.

The de-correlation filter 36 generates a received signal vector from which mutual correlative components among the signal components $Z_1$, $Z_2$...., $Z_M$ and channel distortion are removed using transfer functions estimated by the transfer function estimating circuit 35 based on a received signal vector Z supplied by the de-spreading part 32. The transfer function matrix G(Z) of the de-correlation filter 36 is given by the following formula,

$$G(Z)=[P^{H}S(Z)P]^{-1}P^{H} \qquad (2)$$

where H represents complex conjugate transposition. P is a matrix where estimated channel transfer functions are aligned in the user basis. When each of K users has L channels, if KL=M, P is a complex matrix of MxK. For example, if L=2, then P is given as follows,

$$P = \begin{bmatrix} P_{11} & 0 & . & . & . & . & 0 \\ P_{12} & 0 & . & . & . & . & 0 \\ 0 & P_{21} & 0 & . & . & . & . \\ 0 & P_{22} & 0 & . & . & . & . \\ 0 & & & . & . & . & . \\ . & . & & & & & . \\ . & . & . & . & . & . & 0 \\ . & & & & & 0 & P_{K1} \\ 0 & . & . & . & . & 0 & P_{K2} \end{bmatrix}$$

where $P_{ij}$ is an estimated transfer function of the j-th channel of the i-th user and is the fading complex magnitude $\xi$ of the channel. In the formula (2), $S(Z)^{-1}$ is same as the transfer function of the de-correlation filter 33 when M=KL signal components $Z_1$, ..., $Z_M$ are deemed as signals from independent users, and is a rational function matrix of MxM. The de-correlation filter 36 calculates $G^{-1}(Z)Z$ for a received signal vector Z to obtain KL signal components from which mutual correlative components (interference components) and channel distortion are removed.

Those KL received signals are phase compensated correspondingly to the delays of L channels of each user and composited at the phase compensation and composition part 37 as in RAKE receiving to obtain K composite signals. The composite signal of each user is supplied to a decision part 38 where the signal is level decided to regenerate information symbols for each user.

To perform convolution of the transfer function $G^{-1}(Z)$ which is an inverse Z conversion of a transfer function matrix G(Z) of the formula (2) for a vector where the path separated signal components are arranged is mathematically equivalent to perform a de-correlation filtering process for the signal composited as one signal for each signal source (user) even if multiple channels exist for each signal source (user). Therefore, even if multiple channels exist, the composition result at a receiver input is deemed as one signal. A de-correlation filter is applied to this composite signal. Noise Enhancement is same as in the case where the number of channels is equal to the number of users and is not increased.

Fig. 3 shows a second embodiment of the present invention. The same reference numerals are assigned to the portions corresponding to the embodiment of Fig. 2 but the multiple blocks dependent on the number of signals are simplified to one block. In the embodiment of Fig. 2, in order to eliminate influences of mutual correlation among receiving signal components $Z_1, Z_2,...Z_M$ for transfer functions at the timings of receiving pilot signals 22 to be obtained by the transfer function interpolation part 35, a de-correlation filter 33 is used. The process of the de-correlation filter 36 also includes a process for removing mutual correlations among receiving signals. Therefore, in the embodiment of Fig. 3, regarding the mutual correlation removal by the de-correlation filter 36 of Fig. 2 on the receiving process and the channel distortion removal process signals, the former process is combined into the process of the de-correlation filter 33 and the latter process is performed by the phase compensation and weighted composition part 37', and thus the de-correlation filter 36 is omitted. That is, a received signal vector Z from the de-correlation filter 33 from which mutual correlation components are removed is supplied to the phase compensation and weighted composition part 37'. The phase compensation and weighted composition part 37' is given a transfer function matrix P from the transfer function interpolation part 35 and performs a weighting on each of the inputted receiving signal vector components with the respective channel transfer function value, and performs a phase compensation corresponding to the respective channel delay as in the case of Fig.2. Then, L receiving signals of each user are composited and K composite signals for K users are outputted. Each of the K composite signals is symbol decided by the decision part 38 and K symbols are outputted.

In the aforementioned first and second embodiments, one symbol is used as a pilot signal 22. However, a plurality of consecutive symbols, for example, 2-3 consecutive symbols may be used. If a pilot signal 22 comprises a plurality of symbols, each of the pilot signals corresponding to the respective receiving symbol timing is divided by the respective known symbol value and the division result is averaged. Such a average value is obtained for each pilot signal 22 and transfer functions are estimated using these average values to interpolate between frames.

As the user moves, the transfer function of each channel varies. The higher the used frequency band is, and the faster the moving speed of the user is, the faster the variation speed. Even in such an environment, according to the communication system of the present invention, the follow up ability can be increased by properly setting the interval of the pilot signals.

The above system can also be applied to the case where the number of users is one and the number of channels per user is one. Further, the application range of the present invention is not only for mobile communications but also for other communications.

As described above, even in the high speed fading environment where a de-correlation filter using a prior art channel- recursive-estimation-process cannot be applied, code division multiple access communications (send/receive) are possible by using the present invention.

Fig. 4 shows the characteristics of the present invention obtained through a computer simulation. The following simulation conditions are used: number of simultaneous users is 5, SN ratio after de-spreading is 10 dB, modulation is BPSK and asynchronous communication environment. The frame length is N=4, 8 and 16 (3 cases) and the length of the pilot segment of each frame (training segment) is one symbol. Comparing the ratio of the information symbols to the total transmission symbols, this corresponds to Ns=32, 64 and 128 of Fig. 5 respectively. The horizontal axis represents $f_D T$ which is a normalized value of the maximum Doppler frequency $f_D$ (Hz) normalized with a reciprocal T of symbol transmission rate (bits/sec) and the vertical axis represents average bit error rate of the all users. Comparing Fig. 4 indicating the characteristics of the present invention with Fig. 5 indicating the characteristics of the channel recursive estimation process, the general tendency is similar but average error rate of the present invention at the same $f_D T$ value is two digit less than the channel recursive estimation process. Thus the simulation indicates that the present invention is excellent.

## Claims

1. A method of processing received code division multiple access signals, wherein transmission signals are received from a plurality of users, each transmission signal being spread by a respective spreading code allocated to the respective user and comprising frames of an information data section and a pilot signal section, the latter immediately preceding the information data section and being composed of at least one known symbol, and wherein symbols of the information data section are re-generated, comprising the steps of:

generating the respective spreading codes for K users, wherein K is an integer equal to one or greater;

de-spreading the spread transmission signals received at a receiver's side from K users via L channels per user with the respective spreading codes to obtain a de-spread first signal vector of K·L components, L being an integer equal to one or greater, said L channels having different delay times, wherein each of the K spreading codes is provided at the timing corresponding to the respective delay time of each of the L channels ;

performing a de-correlation filtering process on said first signal vector to obtain a second signal vector of components from which mutual interference has been eliminated;

detecting a plurality of pilot signals included in a series of said second signal vectors for a plurality of frames, calculating for each channel a respective channel transfer function at the time of a respective pilot signal section, and then estimating the respective channel transfer functions at the time of the data signal sections by interpolation based on the calculated channel transfer functions;

obtaining a third signal vector of components, from which both mutual interference and channel distortion have been eliminated, by performing a de-correlation filtering process on said first signal vector based on a transfer function matrix using the estimated transfer functions;

performing a phase compensation on each of the K·L components of said third signal vector in accordance with the respective different delay times of said L channels for each user, and compositing for each user the corresponding L phase compensated components to a respective one of K receiving signals and outputting the K receiving signals corresponding to said K users; and

level deciding each of said K receiving signals and symbol deciding to output them.

2. A method of processing received code division multiple access signals, wherein transmission signals are received from a plurality of users, each transmission signal being spread by a respective spreading code allocated to the respective user and comprising frames of an information data section and a pilot signal section, the latter immediately preceding the information data section and being composed of at least one known symbol, and wherein symbols of the information data are re-generated, comprising the steps of:

generating the respective spreading codes for k users, wherein K is an integer equal to one or greater;

de-spreading the spread transmission signals received at a receiver's side from K users via L channels per user with the respective spreading codes to obtain a de-spread first signal vector of K·L components, and L being an integer equal to one or greater, said L channels having different delay times, wherein each of the k spreading codes is provided at the timing corresponding to the respective delay time of each of the L channels;

performing a de-correlation filtering process on said first signal vector to obtain a second signal vector of components from which mutual interference has been eliminated;

detecting a plurality of pilot signals included in a series of said second signal vectors for a plurality of frames, calculating for each channel a respective channel transfer function at the time of a respective pilot signal section, and then estimating the respective channel transfer functions at the time of the data signal sections by interpolation based on the calculated channel transfer function;

weighting each of said second signal vector components with the respective estimated channel transfer function, performing a phase compensation in accordance with the respective different delay times of said L channels for each user, and compositing for each user L components to a respective one of K receiving signals and outputting the K receiving signals corresponding to said K users; and

level deciding each of said K receiving signals and symbol deciding to output them.

3. The method according to claims 1 or 2 wherein the step of detecting a plurality of pilot signals comprises the steps of:

detecting a predetermined number of pilot signals located before and after each information data section of each frame;

calculating the transfer functions at the timing of the pilot signal detection; and

estimating the transfer function of the information data section by an interpolation based on the calculated transfer functions.

4. The method according to claim 3 wherein each of said pilot signals consists of multiple symbols of known symbol values, each symbol of a respective received pilot signal is divided by the corresponding known symbol value to obtain a respective transfer function and the average value of the transfer functions is used as the transfer function at the time of said respective pilot signal.

5. The method according to claim 3 wherein said predetermined number of pilot signals is one each, before and after said information data section, and the transfer function of said information data section is estimated by a first degree interpolation.

6. An apparatus for re-generating symbols of an information data section included in code division multiple access transmission signals received from a plurality of users, wherein each transmission signal is spread by a respective spreading code allocated to the respective user and comprises frames of said information data section and a pilot signal section, the latter immediately preceding the information data section and being composed of at least one known symbol, comprising:

spreading code generation means (30) for generating the respective spreading codes for K users, K being an integer number equal to 1 or greater;
de-spreading means (32) for receiving said spreading codes and for outputting a de-spread first signal vector consisting of K·L components by de-spreading each spread transmission signal received from each user via L channels per user using said respective spreading codes, L being an integer number equal to 1 or greater, said L channels having different delay times, wherein each of the K spreading codes is provided at the timing corresponding to the respective delay time of each of the L channels ;
first decorrelation filtering means (33) for applying a de-correlation filtering process to said first signal vector and outputting a second signal vector consisting of mutual-interference-eliminated signal components;
transfer function estimating means (34, 35) for detecting a plurality of pilot signals included in a series of said second signal vectors for multiple frames, for calculating for each channel a respective channel transfer function at the time of a respective pilot signal section, and then estimating the respective channel transfer functions at the time of the data signal sections by interpolation based on the calculated channel transfer functions;
second decorrelation filtering means (36) for applying a de-correlation filtering process to said first signal vector based on a transfer function matrix using the estimated transfer functions, and for outputting a third signal vector of components, from which both mutual interference and channel distortion have been eliminated;
phase compensation and composition means (37) for performing a phase compensation on each of the K·L components of said third signal vector in accordance with the respective different delay times of said L channels for each user, and for compositing for each user the corresponding L phase compensated components to a respective one of K receiving signals and outputting said K receiving signals corresponding to said K users; and
decision means (38) for level deciding each of the K receiving signals and for deciding the symbols to output them.

7. An apparatus for re-generating symbols of an information data section included in code division multiple access transmission signals received from a plurality of users, wherein each transmission signal is spread by a respective spreading code allocated to the respective user and comprises frames of said information data section and a pilot signal section, the latter immediately preceding the information data section and being composed of at least one known symbol, comprising:

spreading code generation means (30) for generating the respective spreading codes for K users, K being an integer number equal to 1 or greater;
de-spreading means (32) for receiving said spreading codes and for outputting a de-spread first signal vector consisting of K·L components by de-spreading each spread transmission signal received from each user via L channels per user using said respective spreading codes, L being an integer number equal to 1 or greater, said L channels having different delay time, wherein each fo the K spreading codes is provided at the timing corresponding to the respective delay time of each of the L channels;
decorrelation filtering means (33) for applying a de-correlation filtering process to said first signal vector and for outputting a second signal vector consisting of mutual-interference-eliminated signal components;
transfer function estimating means (34, 35) for detecting a plurality of pilot signals included in a series of said second signal vectors for multiple frames for calculating for each channel a respective channel transfer function at the time of a respective pilot signal section, and then estimating the respective channel transfer functions at the time of the data signal sections by interpolation based on the calculated channel transfer functions;
phase compensation and weighted composition means (37') for weighting each of the K·L components of said second signal vector with the respective estimated transfer function, and for performing a phase compensation on each of the L components for each user in accordance with the respective different delay times of said L channels for the respective user, and for compositing the L components for each user to a respective one of K receiving signals and outputting said K receiving signals corresponding to said K users; and
decision means (38) for level deciding each of the K receiving signals and for deciding the symbols to output them.

8. The apparatus according to claim 6 or 7 wherein said transfer function estimating means (34, 35) comprises:

pilot detecting means (34) for detecting a predetermined number of pilot signals located before and after each information data section of each frame; and
transfer function interpolation means (35) for calculating the transfer functions at the timing of the pilot signal detection and for estimating the transfer function of the information data section by an interpolation based on the calculated transfer functions.

## Patentansprüche

1. Verfahren zur Verarbeitung empfangener Codemultiplex-Vielfachzugriffsignale, bei dem Übertragungssignale von einer Vielzahl Benutzer empfangen werden, wobei jedes Übertragungssignal mit einem dem jeweiligen Benutzer zugeordneten Spreizcode gespreizt ist und Rahmen aus einem Informationsdatenabschnitt und einem Pilotsignalabschnitt aufweist, wobei der letztgenannte unmittelbar vor dem Informationsdatenabschnitt angeordnet ist und aus mindestens einem bekannten Symbol besteht, und bei dem die Symbole des Informationsdatenabschnitts regeneriert werden, das folgende Schritte aufweist:

Erzeugen der entsprechenden Spreizcodes für K Benutzer, wobei K eine ganze Zahl gleich oder größer eins ist;
Entspreizen der empfängerseitig von den K Benutzern über L Kanäle pro Benutzer empfangenen gespreizten Übertragungssignale mit den jeweiligen Spreizcodes, um einen entspreizten ersten Signalvektor mit KL Komponenten zu erhalten, wobei L eine ganze Zahl gleich oder größer eins ist, und die L Kanäle verschiedene Verzögerungszeiten haben, wobei jeder der K Spreizcodes in der Zeitlage entsprechend der jeweiligen Verzögerungszeit jedes der L Kanäle bereitgestellt wird;
Durchführen eines Dekorrelations-Filterungsprozesses mit dem ersten Signalvektor, um einen zweiten Signalvektor mit Komponenten zu erhalten, aus denen die gegenseitige Interferenz eliminiert worden ist;
Erfassen einer Vielzahl Pilotsignale, die in einer Reihe der zweiten Signalvektoren für eine Vielzahl Rahmen enthalten sind, Berechnen für jeden Kanal eine jeweilige Kanal-Transferfunktion im Zeitpunkt eines entsprechenden Pilotsignalabschnitts und dann Schätzen der entsprechenden Kanal-Transferfunktionen im Zeitpunkt der Datensignalabschnitte durch Interpolation auf Basis der berechneten Kanal-Transferfunktionen;
Erlangen eines dritten Signalvektors mit Komponenten, aus denen sowohl die gegenseitige Interferenz als auch die Kanalverzerrung eliminiert worden ist, indem mit dem ersten Signalvektor ein Dekorrelationsfilterungsprozess auf Basis einer Transferfunktionsmatrix unter Verwendung der geschätzten Transferfunktionen durchgeführt wird;
Durchführen eines Phasenausgleichs mit jeder der KL Komponenten des dritten Signalvektors entsprechend der jeweiligen verschiedenen Verzögerungszeiten der L Kanäle für jeden Benutzer, und Zusammensetzen der entsprechenden L phasenausgeglichenen Komponenten zu einem entsprechenden der K Empfangssignale für jeden Benutzer und Ausgabe der K Empfangssignale entsprechend der K Benutzer; und
Pegelentscheiden für jedes der K Empfangssignale und Symbolentscheiden für ihre Ausgabe.

2. Verfahren zur Verarbeitung empfangener Codemultiplex-Vielfachzugriffsignale, bei dem Übertragungssignale von einer Vielzahl Benutzer empfangen werden, wobei jedes Übertragungssignal mit einem dem jeweiligen Benutzer zugeordneten Spreizcode gespreizt ist und Rahmen aus einem Informationsdatenabschnitt und einem Pilotsignalabschnitt aufweist, wobei der letztgenannte unmittelbar vor dem Informationsdatenabschnitt angeordnet ist und aus mindestens einem bekannten Symbol besteht, und bei dem die Symbole des Informationsdatenabschnitts regeneriert werden, das folgende Schritte aufweist:

Erzeugen der entsprechenden Spreizcodes für K Benutzer, wobei K eine ganze Zahl gleich oder größer eins ist;
Entspreizen der empfängerseitig von den K Benutzern über L Kanäle pro Benutzer empfangenen gespreizten Übertragungssignale mit den jeweiligen Spreizcodes, um einen entspreizten ersten Signalvektor mit KL Komponenten zu erhalten, wobei L eine ganze Zahl gleich oder größer eins ist, und die L Kanäle verschiedene Verzögerungszeiten haben, wobei jeder der K Spreizcodes in der Zeitlage entsprechend der jeweiligen Verzögerungszeit jedes der L Kanäle bereitgestellt wird;
Durchführen eines Dekorrelations-Filterungsprozesses mit dem ersten Signalvektor, um einen zweiten Signalvektor mit Komponenten zu erhalten, aus denen die gegenseitige Interferenz eliminiert worden ist;
Erfassen einer Vielzahl Pilotsignale, die in einer Reihe der zweiten Signalvektoren für eine Vielzahl Rahmen enthalten sind, Berechnen für jeden Kanal eine jeweilige Kanal-Transferfunktion im Zeitpunkt eines entsprechenden Pilotsignalabschnitts und dann Schätzen der entsprechenden Kanal-Transferfunktionen im Zeitpunkt der Datensignalabschnitte durch Interpolation auf Basis der berechneten Kanal-Transferfunktionen;
Gewichten jeder der Komponenten des zweiten Signalvektors mit der jeweiligen geschätzten Kanal-Transferfunktion, Durchführen eines Phasenausgleichs entsprechend der jeweiligen verschiedenen Verzögerungszeiten der L Kanäle für jeden Benutzer und Zusammensetzen der L Komponenten zu einem entsprechenden der K empfangenen Signale für jeden Benutzer und Ausgabe der K Empfangssignale entsprechend der K Benutzer; und
Pegelentscheiden für jedes der K Empfangssignale und Symbolentscheiden für ihre Ausgabe.

3. Verfahren nach Anspruch 1 oder 2, bei dem der Schritt des Erfassens der Pilotsignale die Schritte:

Erfassen einer vorgegebenen Anzahl Pilotsignale vor und nach jedem Informationsdatenabschnitt jedes Rahmens;

Berechnen der Transferfunktionen im Zeitpunkt der Erfassung des Pilotsignals; und
Schätzen der Transferfunktion des Informationsdatenabschnitts durch eine Interpolation auf Basis der geschätzten Transferfunktionen aufweist.

4. Verfahren nach Anspruch 3, bei dem jedes der Pilotsignale aus mehreren Symbolen mit bekannten Symbolwerten besteht, wobei jedes Symbol eines jeweiligen empfangenen Pilotsignals durch den entsprechenden bekannten Symbolwert dividiert wird, um eine entsprechende Transferfunktion zu erhalten, und der Mittelwert der Transferfunktionen als Transferfunktion zum Zeitpunkt des jeweiligen Pilotsignals verwendet wird.

5. Verfahren nach Anspruch 3, bei dem die vorgegebene Anzahl Pilotsignale jeweils eines vor und nach dem Informationsdatenabschnitt beträgt, und die Transferfunktion des Informationsdatenabschnitts durch eine Interpolation ersten Grades geschätzt wird.

6. Vorrichtung zum Regenerieren von Symbolen eines Informationsdatenabschnitts, der in von einer Vielzahl Benutzern empfangenen Codemultiplex-Vielfachzugriff-Übertragungssignalen enthalten ist, wobei jedes Übertragungssymbol von einem jeweiligen dem jeweiligen Benutzer zugeordneten Spreizcode gespreizt ist und Rahmen mit dem Informationsdatenabschnitt und dem Pilotsignalabschnitt aufweist, wobei der zuletzt genannte unmittelbar vor dem Informationsdatenabschnitt angeordnet ist und aus mindestens einem bekannten Symbol besteht, aufweisend:

Spreizcode-Generatormittel (30) zum Erzeugen der jeweiligen Spreizcodes für K Benutzer, wobei K eine ganze Zahl gleich 1 oder größer ist;
Entspreizungsmittel (32) zum Empfangen der Spreizcodes und zum Ausgeben eines entspreizten ersten Signalvektors bestehend aus KL Komponenten durch Entspreizen jedes von jedem Benutzer über L Kanäle pro Benutzer empfangenen Spreizübertragungssignals unter Verwendung der entsprechenden Spreizcodes, wobei L eine ganze Zahl gleich 1 oder größer ist und die L Kanäle verschiedene Verzögerungszeiten haben, wobei jeder der K Spreizcodes im Zeitpunkt entsprechend der jeweiligen Verzögerungszeit der L Kanäle bereitgestellt wird;
erste Dekorrelationsfilterungsmittel (33) zum Anwenden eines Dekorrelationsfilterungsprozesses auf den ersten Signalvektor und zur Ausgabe eines zweiten Signalsvektors, der aus Signalkomponenten besteht, aus denen die gegenseitige Interferenz eliminiert worden ist;
Transferfunktions-Schätzungsmittel (34, 35) zur Detektion einer Vielzahl Pilotsignale in einer Reihe der zweiten Signalvektoren für mehrere Rahmen zur Berechnung einer jeweiligen Kanal-Transferfunktion für jeden Kanal zum Zeitpunkt eines jeweiligen Pilotsignalabschnitts und dann Schätzen der jeweiligen Kanal-Transferfunktionen zum Zeitpunkt der Datensignalabschnitte durch Interpolation auf Basis der berechneten Kanal-Transferfunktionen;
zweite Dekorrelationsfilterungsmittel (36) zum Anwenden eines Dekorrelationsfilterungsprozesses auf den ersten Signalvektor auf Basis der Transferfunktionsmatrix unter Verwendung der geschätzten Transferfunktionen und zur Ausgabe eines dritten Signalsvektors, der aus Signalkomponenten besteht, aus denen sowohl die gegenseitige interferenz als auch die Kanalverzerrung eliminiert worden sind;
Phasenausgleichs- und Zusammensetzungsmittel (37) zum Durchführen eines Phasenausgleichs mit jeder der KL Komponenten des dritten Signalvektors entsprechend der jeweiligen verschiedenen Verzögerungszeiten der L Kanäle für jeden Benutzer, und zum Zusammensetzen der entsprechenden L phasenausgeglichenen Komponenten zu einem jeweiligen der K Empfangssignale für jeden Benutzer und Ausgabe der K Empfangssignale entsprechend der K Benutzer; und

Entscheidungsmittel (38) zur Pegelentscheidung für jedes der K Empfangssignale und zur Entscheidung der Symbole für ihre Ausgabe.

7. Vorrichtung zum Regenerieren von Symbolen eines Informationsdatenabschnitts, der in von einer Vielzahl Benutzern empfangenen Codemultiplex-Vielfachzugriff-Übertragungssignalen enthalten ist, wobei jedes Übertragungssymbol von einem jeweiligen dem jeweiligen Benutzer zugeordneten Spreizcode gespreizt ist und Rahmen mit dem Informationsdatenabschnitt und dem Pilotsignalabschnitt aufweist, wobei der zuletzt genannte unmittelbar vor dem Informationsdatenabschnitt angeordnet ist und aus mindestens einem bekannten Symbol besteht, aufweisend:

Spreizcode-Generatormittel (30) zum Erzeugen der jeweiligen Spreizcodes für K Benutzer, wobei K eine ganze Zahl gleich 1 oder größer ist;
Entspreizungsmittel (32) zum Empfangen der Spreizcodes und zum Ausgeben eines entspreizten ersten Signalvektors bestehend aus KL Komponenten durch Entspreizen jedes von jedem Benutzer über L Kanäle pro Benutzer empfangenen Spreizübertragungssignals unter Verwendung der entsprechenden Spreizcodes, wobei L eine ganze Zahl gleich 1 oder größer ist und die L Kanäle verschiedene Verzögerungszeiten haben, wobei jeder der K Spreizcodes im Zeitpunkt entsprechend der jeweiligen Verzögerungszeit der L Kanäle bereitgestellt wird;
Dekorrelationsfilterungsmittel (33) zum Anwenden eines Dekorrelationsfilterungsprozesses auf den ersten Signalvektor und zur Ausgabe eines zweiten Signalsvektors, der aus Signalkomponenten besteht, aus denen die gegenseitige Interferenz eliminiert worden ist;
Transferfunktions-Schätzungsmittel (34, 35) zur Detektion einer Vielzahl Pilotsignale in einer Reihe der zweiten Signalvektoren für mehrere Rahmen zur Berechnung einer jeweiligen Kanal-Transferfunktion für jeden Kanal zum Zeitpunkt eines jeweiligen Pilotsignalabschnitts und dann Schätzen der jeweiligen Kanal-Transferfunktionen zum Zeitpunkt der Datensignalabschnitte durch Interpolation auf Basis der berechneten Kanal-Transferfunktionen;
Phasenausgleichs- und gewichtete Zusammensetzungsmittel (37') zum Gewichten jeder der KL Komponenten des zweiten Signalvektors mit der jeweiligen geschätzten Transferfunktion und zum Durchführen eines Phasenausgleichs für jeden der L Komponenten für jeden Benutzer entsprechend den jeweiligen verschiedenen Verzögerungszeiten der L Kanäle für den jeweiligen Benutzer, und zum Zusammensetzen der L Komponenten zu einem jeweiligen der K Empfangssignale für jeden Benutzer und Ausgabe der K Empfangssignale entsprechend der K Benutzer; und
Entscheidungsmittel (38) zur Pegelentscheidung für jedes der K Empfangssignale und zur Entscheidung der Symbole für ihre Ausgabe.

8. Vorrichtung nach Anspruch 6 oder 7, bei dem die Transferfunktions-Schätzungsmittel (34, 35) aufweisen:

Pilotdetektormittel (34) zum Erfassen einer vorgegebenen Anzahl Pilotsignale, die vor und nach jedem Informationsdatenabschnitt jedes Rahmens angeordnet sind; und
Transferfunktions-Interpolationsmittel (35) zur Berechnung der Transferfunktionen zum Zeitpunkt der Pilotsignalerfassung und zur Schätzung der Transferfunktion des Informationsdatenabschnitts durch eine Interpolation auf Basis der berechneten Transferfunktionen.

## Revendications

1. Procédé de traitement de signaux d'accès multiple par répartition par code qui sont reçus, dans lequel des signaux d'émission sont reçus d'une multiplicité d'utilisateurs, chaque signal d'émission étant étalé par un code d'étalement respectif alloué à l'utilisateur respectif et comprenant des trames d'une section de données d'information et d'une section de signal pilote, cette dernière précédant immédiatement la section de données d'information et étant composée d'au moins un symbole connu, et dans lequel des symboles de la section de données d'information sont régénérés, comprenant les étapes suivantes :

on génère les codes d'étalement respectifs pour K utilisateurs, K étant un entier égal ou supérieur à un;
on désétale les signaux d'émission étalés reçus à un côté d'un récepteur, à partir de K utilisateurs par l'intermédiaire de L canaux par utilisateur, avec les codes d'étalement respectifs, pour obtenir un premier vecteur de signal désétalé ayant K.L composantes, L étant un entier égal ou supérieur à un, les L canaux ayant des temps de retard différents, chacun des K codes d'étalement étant fourni à l'instant qui correspond au temps de retard respectif de chacun des L canaux;

on effectue un processus de filtrage de décorrélation sur le premier vecteur de signal pour obtenir un second vecteur de signal de composantes desquelles un brouillage mutuel a été éliminé;

on détecte une multiplicité de signaux pilotes inclus dans une série des seconds vecteurs de signal pour une multiplicité de trames, on calcule pour chaque canal une fonction de transfert de canal respective au moment d'une section de signal pilote respective, et on estime ensuite les fonctions de transfert de canal respectives au moment des sections de signal de données, par interpolation basée sur les fonctions de transfert de canal calculées;

on obtient un troisième vecteur de signal de composantes, duquel à la fois le brouillage mutuel et la distorsion de canal ont été éliminés, en effectuant un processus de filtrage de décorrélation sur le premier vecteur de signal, sur la base d'une matrice de fonction de transfert utilisant les fonctions de transfert estimées;

on effectue une compensation de phase sur chacune des K.L composantes du troisième vecteur de signal, conformément aux différents temps de retard respectifs des L canaux pour chaque utilisateur, et on combine pour chaque utilisateur les L composantes à phase compensée correspondante avec l'un respectif des K signaux reçus, et on fournit en sortie les K signaux reçus correspondant aux K utilisateurs; et

on prend une décision de niveau sur chacun des K signaux reçus et on prend une décision de symbole pour les fournir en sortie.

2. Procédé de traitement de signaux d'accès multiple par répartition par code qui sont reçus, dans lequel des signaux d'émission sont reçus d'une multiplicité d'utilisateurs, chaque signal d'émission étant étalé par un code d'étalement respectif alloué à l'utilisateur respectif et comprenant des trames d'une section de données d'information et d'une section de signal pilote, cette dernière précédant immédiatement la section de données d'information et étant composée d'au moins un symbole connu, et dans lequel des symboles de la section de données d'information sont régénérés, comprenant les étapes suivantes :

on génère les codes d'étalement respectifs pour K utilisateurs, K étant un entier égal ou supérieur à un;

on désétale les signaux d'émission étalés reçus du côté d'un récepteur, à partir de K utilisateurs par l'intermédiaire de L canaux par utilisateur, avec les codes d'étalement respectifs, pour obtenir un premier vecteur de signal désétalé ayant K.L composantes, L étant un entier égal ou supérieur à un, les L canaux ayant des temps de retard différents, chacun des K codes d'étalement étant fourni à l'instant qui correspond au temps de retard respectif de chacun des L canaux;

on effectue un processus de filtrage de décorrélation sur le premier vecteur de signal pour obtenir un second vecteur de signal de composantes desquelles un brouillage mutuel a été éliminé;

on détecte une multiplicité de signaux pilotes inclus dans une série des seconds vecteurs de signal pour une multiplicité de trames, on calcule pour chaque canal une fonction de transfert de canal respective au moment d'une section de signal pilote respective, et on estime ensuite les fonctions de transfert de canal respectives au moment des sections de signal de données, par interpolation basée sur la fonction de transfert de canal calculée;

on pondère chacune des composantes du second vecteur de signal avec la fonction de transfert de canal estimée respective, on effectue une compensation de phase conformément aux différents temps de retard respectifs des L canaux pour chaque utilisateur, et on combine pour chaque utilisateur L composantes avec l'un respectif de K signaux de réception et on fournit en sortie les K signaux de réception correspondant aux K utilisateurs; et

on prend une décision de niveau sur chacun des K signaux de réception et on prend une décision de symbole pour les fournir en sortie.

3. Procédé selon les revendications 1 ou 2, dans lequel l'étape de détecter de signaux pilotes comprend les étapes suivantes:

on détecte un nombre prédéterminé de signaux pilotes placés avant et après chaque section de données d'information de chaque trame;

on calcule les fonctions de transfert au moment de la détection des signaux pilotes; et

on estime la fonction de transfert de la section de données d'information par une interpolation basée sur les fonctions de transfert calculées.

4. Procédé selon la revendication 3, dans lequel chacun des signaux pilotes consiste en multiples symboles de valeurs de symboles connues, chaque symbole d'un signal pilote reçu respectif est divisé par la valeur de symbole connue correspondante pour obtenir une fonction de transfert respective, et la valeur moyenne des fonctions de transfert est utilisée comme la fonction de transfert au moment du signal pilote respectif.

5. Procédé selon la revendication 3, dans lequel le nombre prédéterminé de signaux pilotes est égal à un pour chacun, avant et après la section de données d'information, et la fonction de transfert de la section de données d'information est estimée par une interpolation au premier degré.

6. Appareil pour régénérer des symboles d'une section de données d'information incluse dans des signaux d'émission à accès multiple par répartition par code, reçus d'une multiplicité d'utilisateurs, dans lequel chaque signal d'émission est étalé par un code d'étalement respectif alloué à l'utilisateur respectif, et comprend des trames de la section de données d'information et d'une section de signal pilote, cette dernière précédant immédiatement la section de données d'information et étant composée d'au moins un symbole connu, comprenant :

des moyens de génération de codes d'étalement (30) pour générer les codes d'étalement respectifs pour K utilisateurs, K étant un nombre entier égal ou supérieur à un ;

un moyen de désétalement (32) pour recevoir les codes d'étalement et pour fournir en sortie un premier vecteur de signal désétalé consistant en K.L composantes, en désétalant chaque signal d'émission étalé reçu à partir de chaque utilisateur par l'intermédiaire de L canaux par utilisateur, en utilisant les codes d'étalement respectifs, L étant un nombre entier égal ou supérieur à 1, les L canaux ayant différents temps de retard, dans lequel chacun des K codes d'étalement est fourni à l'instant correspondant au temps de retard respectif de chacun des L canaux;

un premier moyen de filtrage de décorrélation (33) pour appliquer un processus de filtrage de décorrélation au premier vecteur de signal et pour fournir en sortie un second vecteur de signal consistant en composantes de signal desquelles le brouillage mutuel est éliminé;

un moyen d'estimation de fonction de transfert (34, 35) pour détecter une multiplicité de signaux pilotes inclus dans une série des seconds vecteurs de signal pour de multiples trames pour calculer pour chaque canal une fonction de transfert de canal respective au moment d'une section de signal pilote respective, et pour estimer ensuite les fonctions de transfert de canal respectives au moment des sections de signal de données par interpolation basée sur les fonctions de transfert de canal calculées;

un second moyen de filtrage de décorrélation (36) pour appliquer un processus de filtrage de décorrélation au premier vecteur de signal sur la base d'une matrice de fonction de transfert utilisant les fonctions de transfert estimées, et pour fournir en sortie un troisième vecteur de signal de composantes desquelles à la fois le brouillage mutuel et la distorsion de canal ont été éliminés;

un moyen de compensation de phase et de combinaison (37) pour effectuer une compensation de phase sur chacune des K.L composantes du troisième vecteur de signal, conformément aux différents temps de retard respectifs des L canaux pour chaque utilisateur, et pour combiner pour chaque utilisateur les L composantes compensées en phase correspondante, avec l'un respectif de K signaux de réception, et pour fournir en sortie les K signaux de réception correspondant aux K utilisateurs; et

un moyen de décision (38) pour prendre une décision de niveau sur chacun des K signaux de réception et pour prendre une décision sur les symboles pour les fournir en sortie.

7. Appareil pour régénérer des symboles d'une section de données d'information incluse dans des signaux d'émission à accès multiple par répartition par code, reçus d'une multiplicité d'utilisateurs, dans lequel chaque signal d'émission est étalé par un code d'étalement respectif alloué à l'utilisateur respectif, et comprend des trames de la section de données d'information et d'une section de signal pilote, cette dernière précédant immédiatement la section de données d'information et étant composée d'au moins un symbole connu, comprenant :

des moyens de génération de codes d'étalement (30) pour générer les codes d'étalement respectifs pour K utilisateurs, K étant un nombre entier égal ou supérieur à un;

un moyen de désétalement (32) pour recevoir les codes d'étalement et pour fournir en sortie un premier vecteur de signal désétalé consistant en K.L composantes, en désétalant chaque signal d'émission étalé reçu à partir de chaque utilisateur par l'intermédiaire de L canaux par utilisateur, en utilisant les codes d'étalement respectifs, L étant un nombre entier égal ou supérieur à 1, les L canaux ayant différents temps de retard, dans lequel chacun des K codes d'étalement est fourni à l'instant correspondant au temps de retard respectif de chacun des L canaux;

un moyen de filtrage de décorrélation (33) pour appliquer un processus de filtrage de décorrélation au premier vecteur de signal et pour fournir en sortie un second vecteur de signal consistant en composantes de signal desquelles le brouillage mutuel est éliminé;

un moyen d'estimation de fonction de transfert (34, 35) pour détecter une multiplicité de signaux pilotes inclus dans une série des seconds vecteurs de signal pour de multiples trames pour calculer pour chaque canal une fonction de transfert de canal respective au moment d'une section de signal pilote respective, et pour estimer ensuite les fonctions de transfert de canal respectives au moment des sections de signal de données par interpolation basée sur les fonctions de transfert de canal calculées;

un moyen de compensation de phase et de pondération (37') pour pondérer chacune des K.L composantes du second vecteur de signal avec la fonction de transfert estimée respective, et pour effectuer une compensation de phase sur chacune des L composantes pour chaque utilisateur, conformément aux différents temps de retard respectifs des L canaux pour l'utilisateur respectif, et pour combiner les L composantes pour chaque utilisateur avec l'un respectif de K signaux de réception, et fournir en sortie les K signaux de réception correspondant aux K utilisateurs; et

un moyen de décision (38) pour prendre une décision de niveau pour chacun des K signaux de réception et pour prendre une décision sur les symboles pour les fournir en sortie.

8. Appareil selon les revendications 6 ou 7, dans lequel le moyen d'estimation de fonction de transfert (34, 35) comprend :

un moyen de détection de pilotes (34) pour détecter un nombre prédéterminé de signaux pilotes placés avant et après chaque section de données d'information de chaque trame; et

un moyen d'interpolation de fonction de transfert (35) pour calculer les fonctions de transfert au moment de la détection des signaux pilotes et pour estimer la fonction de transfert de la section de données d'information par une interpolation basée sur les fonctions de transfert calculées.

FIG.1

FRAME
LENGTH ($= N$)

| INFORMATION SYMBOLS | INFORMATION SYMBOLS | INFORMATION SYMBOLS |

22   21  22   21  22   21   22

PILOT SYMBOLS

FIG.3

32

DESPREADING
PART

33

DECORRELATING
DETECTOR

z

34

PILOT
DETECTION
PART

$C_1 - C_K$

SPREADING CODE
GENERATION
PART

30

35

CHANNEL
ESTIMATION
WITH PILOT-
SYMBOL AIDED
INTERPOLATION

P

PHASE
COMPENSATION
RAKE COMBING

37'

38

FIG. 2

DECORRELATION FILTER 33

PILOT DETECTION 34

DESPREADING UNIT 32 32M 32₂ 32₁

Z

Z

Z

CHANNEL ESTIMATION WITH PILOT-SYMBOL AIDED INTERPOLATION 35

31

Z

P

$C_1$ $C_2$ $C_K$

SPREADING CODE GENERATION PART 30

DECORRELATION FILTER 36

37

38

39

PHASE COMPENSATION & COMPOSITION PART

EP 0 721 264 B1

16

FIG. 4

FIG. 5

FIG. 6